# EUROPEAN PATENT SPECIFICATION

(11) **EP 0 761 786 B1**
(45) Date of publication and mention of the grant of the patent: **31.07.2002**
(21) Application number: 96114244.5
(22) Date of filing: 05.09.1996
(51) Int. Cl.: C09D 113/02, C09D 5/00, C09D 121/02

(54) **Powder coating primer composition**
Grundanstrich-Zusammensetzung für Pulverlacke
Composition d'une peinture de fond pour des revêtements en poudre

(30) Priority: 07.09.1995 JP 23006595; 14.09.1995 JP 23720095; 19.12.1995 JP 33016295
(43) Date of publication of application: 12.03.1997
(73) Proprietor: Daicel-Degussa Ltd., Chiyoda-ku, Tokyo (JP)
(72) Inventor: Ichikawa, Haruo, Himeji-shi, Hoygo (JP)
(74) Representative: Grünecker, Kinkeldey, Stockmair & Schwanhäusser Anwaltssozietät

(56) References cited:
- GB-A- 917 224
- CHEMICAL ABSTRACTS, vol. 96, no. 14, 5 April 1982 Columbus, Ohio, US; abstract no. 105910, XP002037086 & JP 56 159 257 A (UBE INDUSTRIES, LTD) 8 December 1981
- DATABASE WPI Section Ch, Week 9538 Derwent Publications Ltd., London, GB; Class A12, AN 95-290610 XP002037087 & JP 07 188 584 A (DAICEL HUELS KK) , 25 July 1995

## Description

The present invention relates to a process for producing a polymer-coated article of metal by coating the surface of an article of metal having a shape such as a pipe, a filament, a rod, a plate or the like with a polymer such as a thermoplastic or thermosetting resin or the like through a specific primer, which can give a polymer-coated article of metal being not only excellent in appearance, corrosion resistance, electrical insulation, wear resistance and weatherability but also remarkably improved in adhesion between the article of metal and the polymer coat and water resistance; and powder coating primer compositions therefor.

Diene polymers such as polybutadiene have already been used as the primers for the application of powdered thermoplastic resins such as powdered nylon. The articles of metal powder-coated with polymers by the use of such primers are used as pipes, tubes, panels or the like by virtue of their excellent resistances to water, weather, corrosion and so on. However, the article which are always in contact with water, e.g., potable water pipe, sewer pipe, panel for water storage tank, are required to have particularly high water resistance, and the article of metal powder-coated with a polymer by using such a diene polymer alone as the primer often suffers from peeling under such severe use conditions.

Furthermore, the above primer is subjected to baking in an oven at a high temperature after application and drying, so that halogenated hydrocarbons such as trichloroethane were used as the medium for the primer from the standpoints of dryability and fireproofness. However, the use of halogenated hydrocarbons such as trichloethane and a chlorofluorocarbon has been restricted owing to the requests from the standpoint of global environment conservation such as protection of the ozonosphere. Although it is thought to use lower aliphatic or aromatic hydrocarbons as the substitutes for the above compounds, such hydrocarbons have low flash points and are toxic to the human body to be not a little problem in respects of prevention of disasters and working atmosphere.

The primer described in US 4268579 is a good one comprising a diene polymer and magnesium oxide and being able to keep the adhesivity tenaciousness between a substrate and a thermoplastic resin coat for a remarkably long time. However, this primer is also not free from the above problem, because a halogenated hydrocarbon is used as the medium.

Further, the inventors of the present invention have disclosed in JP-A 7-188584 that a water-based primer exhibiting excellent bonding properties can be obtained by mixing a partially acid-modified diene polymer with an organic amine compound. However, the bonding properties of this water-based primer are lower than those of the above magnesium oxide containing primer and therefore has been required to be further improved in this respect. When magnesium oxide is added to the water-based primer, the magnesium oxide is exothermically converted into magnesium hydroxide, which not only lowers the adhesion as primer but also precipitates the acid-modified diene polymer disadvantageously.

Diene polymers such as polybutadiene have already been used as the primers for the application of powdered thermoplastic resins, particularly powdered nylon (US 4268579).

The inventors of the present invention have already developed a water-based primer equivalent or superior to the primers of the prior art in adhesion by mixing a partially acid-modified diene polymer with an organic amine compound or ammonia (JP-A 7-188584). This water-based primer does not cause environmental pollution to be excellent in safety, and can bond a synthetic resin coat to metal firmly. However, the water-based primer is too poor in water resistance to be used in the production of members which are brought into contact with water or an aqueous solution for a long time or at a high temperature, for example, potable water pipe, sewer pipe, panel for water storage tank and so on. Therefore, the primer has also been required to be further improved.

Further, JP 56159257 A discloses a composition of 100 parts of bisphenol A-epichlorohydrin copolymer (I), 3 to 120 parts carboxy group-containing diene polymers and 30 to 200 wt.% zinc oxide and/or magnesium oxide in organic solvents as primers for coating of metals with powdered polyamides.

Additionally, GB 917,224 A discloses a priming composition comprising a resinous copolymer of a diene and a vinyl compound copolymerizable therewith together with an organic rubber vulcanisation accelerator, said copolymer and accelerator being dissolved or dispersed in a liquid medium. Furthermore, the priming composition has a pH value not greater than 5.0 and may contain a metal oxide as a pigment.

The object of the present invention is to remarkably improve the bonding properties of a water-based primer, which exhibits excellent bonding properties and has no problem in working atmosphere and safety.

The inventors of the present invention have extensively studied for the purpose of improving the water resistance of a primer coat to find that the water resistance required for the article used in the above wet atmosphere can be attained by using a primer comprising an acid-modified diene polymer, an aliphatic amine compound or ammonia, an aromatic polyamine compound and an aqueous medium and that the use of a primer obtained by further adding an inorganic filler to this primer can give a further improved water resistance. The second embodiment of the present invention has been achieved on the basis of these findings.

However, aromatic polyamine compounds are problem in toxicity such as mutagenicity, acute toxicity and carcinogenicity, dispersibility in water, cost and so on, and therefore the development of a substitute therefor has been expected.

The inventors of the present invention have also found that a primer being excellent in adhesion and improved in toxicity, dispersibility and cost can be obtained by replacing the aromatic polyamine compound of the above primer composition by an amine precursor. The third embodiment of the present invention has been achieved on the basis of this finding.

Namely, the first embodiment of the present invention relates to a powder coating primer comprising an inorganic filler having an isoelectric point of 7 or larger on the surface thereof, an acid-modified diene polymer, an organic amine compound or ammonia and an aqueous medium; another primer comprising an inorganic filler having an isoelectric point of 7 or larger on the surface thereof and being difficulty reactive with water, an acid-modified diene polymer, an organic amine compound or ammonia and an aqueous medium; and a process for producing a polymer-coated article of metal which comprises the steps of coating an article of metal on the surface with the above primer, baking the resultant and coating the resulting article on the surface with a polymer by a fluidized bed dip coating method or an electrostatic coating method.

The use of the powder coating primer of the first embodiment of the present invention can remarkably improve the adhesion between a polymer coat and metal which could not sufficiently be enhanced by the use of the solvent-based and water-based primers of the prior art. Further, the water-based primer of the first embodiment also exhibits excellent bonding properties to enable the establishment of a manufacturing process of a polymer-coated article of metal which is advantageous in working atmosphere and safety.

The second embodiment of the present invention relates to a powder coating primer comprising an acid-modified diene polymer, an aliphatic amine compound or ammonia, an aromatic polyamine compound, and an aqueous medium; another powder coating primer comprising an acid-modified diene polymer, an aliphatic amine compound or ammonia, an aromatic polyamine compound, an inorganic filler and an aqueous medium; and a process for producing a polymer-coated article of metal which comprises the steps of coating an article of metal on the surface with the above primer, baking the resultant to cure the primer, and coating the resulting article on the surface with a polymer by the fluidized bed dip coating method or the electrostatic coating method.

In general, the introduction of a crosslinked structure to a coating film enhances the mechanical strengths of the film to improves the resistances of the film to thermal expansion and shrinkage, consequently bringing about improvement in the adhesion of the film to a substrate. The primer of the second embodiment is one obtained by further adding an aromatic polyamine compound to a primer comprising a partially acid-modified diene polymer, an aliphatic amine compound or ammonia, and an aqueous medium. In the baking step, the primer is crosslinked through the reaction of the carboxyl or acid anhydride group of the polymer and/or the active groups (such as carboxyl, aldehyde and epoxy groups) formed by the oxidation of a double bond with the aromatic polyamine compound to give a firm primer layer.

The use of the powder coating primer of the second embodiment of the present invention can remarkably improve the water resistance which could not sufficiently be enhanced by the use of the solvent-based and water-based primers of the prior art. Furthermore, the primer of the second embodiment contains water as the medium to enable the establishment of a manufacturing process of a polymer-coated article of metal which is advantageous in working atmosphere and safety.

The third embodiment of the present invention relates to a powder coating primer comprising an acid-modified diene polymer, an aliphatic amine compound or ammonia, an amine precursor and an aqueous medium; another powder coating primer comprising an acid-modified diene polymer, an aliphatic amine compound or ammonia, an amine precursor, an inorganic filler and an aqueous medium; and a process for producing a polymer-coated article of metal which comprises the steps of coating an article of metal on the surface with the above primer, baking the resultant to cure the primer, and coating the resulting article on the surface with a polymer by the fluidized bed dip coating method or the electrostatic coating method.

The use of the powder coating primer of the third embodiment can remarkably improve the water resistance and toxicity in which the solvent-based and water-based primers of the prior art were problematic. Further, the primer of the third embodiment contains water as the medium to enable the establishment of a manufacturing process of a polymer-coated article of metal which is advantageous in working atmosphere and safety.

The inorganic filler to be used in the first embodiment of the present invention is one having an isoelectric point of 7 or larger on the surface thereof, and such an inorganic filler includes oxides and hydroxides of various transition metals, specific carbon blacks and so on. These inorganic fillers may be used each alone or as a mixture of two or more of them. In general, the isoelectric point of a metal oxide depends on the impurities contained in the oxide and varies to some extent depending upon the production process or purification method thereof (G. A. Parks, Chem. Review, 65, 177 (1965)).

Some metal oxides cannot be used for the water-based primers, because they react with water to form hydroxides which precipitate the acid-modified diene polymer. Accordingly, the metal oxide usable for the water-based primer is limited and specific examples thereof include zinc oxide, iron oxide, copper oxide, nickel oxide, cobalt oxide and tin oxide. Zinc oxide is the most desirable from the standpoints of stability of the oxide, toxicity, dispersibility in the primer, cost and so on.

The specific carbon black to be used in the first embodiment is one exhibiting a pH exceeding 7 when dispersed in water. Particular examples of such carbon black include Printexes (products of Degussa) and Molaccos (products of Columbian Carbon).

A non-modified diene polymer can be used for the organic solvent-based primer according to the first embodiment of the present invention, and in such a case, the addition of a metal hydroxide does not cause precipitation. Accordingly, not only metal oxides but also various metal hydroxides can be used as the inorganic filler having an isoelectric point of 7 or larger on the surface thereof which constitutes the solvent-based primer according to the first embodiment. Further, inorganic fillers being easily reactive with water may also be used.

Such an inorganic filler is negatively charged on the surface thereof in an atmosphere having a pH not exceeding the isoelectric point of the filler owing to the functional groups present on the surface or the formation of metal hydroxide by hydration, and therefore forms strong interaction with carboxylic acid in such an atmosphere (H. Murase, "Shiki-zai (Coloring Materials)", 60, 225 (1987)). On the other hand, it has been known that an article of metal coated with a primer comprising a diene polymer is baked, the diene polymer reacts with atmospheric oxygen to form carboxylic groups. Accordingly, when such baking is conducted in the presence of an inorganic filler negatively charged on the surface thereof, a primer coat wherein the diene polymer is strongly bonded to the inorganic filler is formed, and the strengthening of such a primer layer must be contributory to enhancement in the adhesivity.

Further, the difference in coefficient of thermal expansion between a metal and a resin applied thereon is so great that a large internal stress generates at the interface between the metal and the resin during the steps of baking, powder coating and cooling, which is causative of lowering in the adhesivity. Accordingly, it is desirable that the primer has a coefficient of thermal expansion lying between those of the metal and the resin. However, the coefficient of thermal expansion of the baked diene polymer is presumed to be near that of the resin. It is believed that the addition of the inorganic filler not only lowers the coefficient of thermal expansion of the baked primer layer to thereby decrease the internal stress at the interface, thus enhancing the adhesivity, but also contributes to enhancement in the cohesion of the primer layer.

It is preferable to use an inorganic filler having an isoelectric point of 7 or larger on the surface thereof in an amount of 20 to 120 parts by weight, still preferably 50 to 90 parts by weight, per 100 parts by weight of the diene or acid-modified diene polymer used. When the amount is lower than 20 parts by weight, the coefficient of thermal expansion of the primer layer will little be lowered to fail in relaxing the internal stress sufficiently, i.e., the addition of the inorganic filler will be little effective. On the contrary, when the amount exceeds 120 parts by weight, not only no stable dispersion will be formed but also the baked primer layer will be brittle to result in poor bonding properties.

The acid-modified diene polymer to be used in the first embodiment is a polymer prepared by copolymerizing a compound having conjugated double bonds, e.g., butadiene or isoprene, with acrylic acid, methacrylic acid, maleic anhydride or the like, or by polymerizing a compound having conjugated double bonds and treating the obtained polymer with maleic anhydride or the like.

In the first embodiment, carboxylic acid units are introduced into a diene polymer in order to enable the dispersion of the polymer in water, and the amount of the acid units introduced is preferably within such a range as to give an acid value of 5 to 500 mgKOH/g. When the acid value of the polymer is lower than 5 mgKOH/g, the resulting polymer will be poor in water solubility even in the form of a salt with an amine compound to fail in forming a stable solution. On the other hand, when the acid value exceeds 500 mgKOH/g, not only an acid-modified diene polymer having such an acid value will be difficult of production, but also the adhesion to a polymer coat, particularly after treatment with hot water, will be unfavorably poor because of the too high hydrophilicity of the primer layer.

It is suitable that the acid-modified diene polymer to be used in the first embodiment has a molecular weight of at least 500, preferably about 1000 to 5000. When the molecular weight of the acid-modified diene polymer is too low, the adhesion will be poor, while when it is too high, the resulting solution will be so viscous as to give a coating weight exceeding the optimum quantity. The optimum coating weight of the acid-modified diene polymer on a steel plate is about 0.2 to 1.2 mg/cm², preferably 0.3 to 0.8 mg/cm².

In the first embodiment of the present invention, an organic amine compound is used in order to enhance the solubility of an acid-modified diene polymer in water through the formation of a salt of the polymer with the amine compound. In the baking step, the salt thus formed is decomposed into an organic amine compound, which is released from the system. Accordingly, the organic amine compound to be used in the present invention is not particularly limited but may be any commercially available low-molecular weight organic monoamine compound. Examples of such a monoamine compound include allyamines, isopropylamines, ethylamines, isobutylamines, n-butylamines, sec-butylamines, t-butylamines, propylamines, 2-ethylhexylamines, morpholines, pyridines, piperidines, piperazines, amino alcohols and anilines. Alternatively, ammonia may be used instead of the organic amine compound.

In the water-based primer of the first embodiment, an inorganic filler having an isoelectric point of 7 or larger on the surface thereof and being difficulty reactive with water, an organic amine compound or ammonia, and water are used in amounts of 20 to 120 parts by weight (preferably 50 to 90 parts by weight), 5 to 50 parts by weight (preferably 15 to 30 parts by weight) and 300 to 1500 parts by weight (preferably 400 to 900 parts by weight) respectively per 100 parts by weight of the acid-modified diene polymer used. In practice, it is preferable to regulate the amounts of the components within the above ranges in consideration of dispersion stability of the primer, reduction of drying time and selection of solid content.

The primer of the first embodiment of the present invention may further contain cobalt or manganese ion to accelerate the oxidation in the baking step. It is suitable that the cobalt or manganese ion is added as a compound uniformly soluble in the primer, for example, cobalt naphthenate or cobalt octanoate. It is suitable that cobalt and magnesium ions are used in a sum total of 0.05 to 1.00 part by weight, preferably 0.2 to 0.6 part by weight per 100 parts by weight of the diene or acid-modified diene polymer used. Further, a dispersion stabilizer such as finely-ground silica gel may be added to the primer for the purpose of helping the dispersion of the inorganic filler to prevent the filler from re-aggregation.

Additionally, the water-based primer may contain other additional components. For example, ethyl cellosolve, butyl cellosolve or the like may be added to the primer as an additive for improving the smoothness of primer surface coat and fluidity exhibited when the primer is applied to a metal. Further, a small amount of a water-soluble rust preventive may be added to prevent excessive rusting.

The process for producing a polymer-coated article of metal by the use of the powder coating primer of the first embodiment according to the present invention comprises uniformly applying the primer to an optionally degreased article of metal by a conventional method such as dipping, baking the resultant by the use of a heating means such as high-frequency induction heating or an electric oven to cure the primer, and coating the resulting article on the surface with a polymer by the fluidized bed dip coating method or the electrostatic coating method.

The primer applied on an article of metal is oxidized with atmospheric oxygen in the baking step to form active groups. When the baking conditions are too mild, the formation of the active groups will be insufficient, while when they are too severe, the primer will be carbonized to result in poor bonding properties. The baking temperature is suitably 250 to 400°C. Although the baking time varies depending on the baking temperature, it is 4 to 10 minutes at a baking temperature of 350°C.

The coating polymer to be used in the first embodiment of the present invention includes thermoplastic and thermosetting resins. Preferable examples thereof include polyamide, polyethylene, polyester, polyvinyl chloride, fluorocarbon resins and epoxy resins.

The article of metal may be made of various industrial metal materials such as iron, steel or aluminum and may have various shapes such as a pipe, a filament, a rod or a plate.

The acid-modified diene polymer to be used in the second embodiment of the present invention is a polymer prepared by copolymerizing a compound having conjugated double bonds, e.g., butadiene or isoprene, with a carboxylic acid or carboxylic acid anhydride such as acrylic acid, methacrylic acid, maleic anhydride or the like, or by polymerizing a compound having conjugated double bonds and treating the obtained polymer with maleic anhydride or the like.

In the second embodiment, carboxylic acid units are introduced into a diene polymer in order to enable the dispersion of the polymer in water, and the amount of the acid units introduced is preferably within such a range as to give an acid value of 5 to 500 mgKOH/g. When the acid value of the polymer is lower than 5 mgKOH/g, the resulting polymer will be poor in water solubility even in the form of a salt with an amine compound or ammonia to fail in forming a stable aqueous solution. On the other hand, when the acid value exceeds 500 mgKOH/g, not only an acid-modified diene polymer having such a high acid value will be difficult of production but also the adhesion after treatment with hot water will be unfavorably poor because of the too high hydrophilicity of the primer layer.

It is suitable that the acid-modified diene polymer to be used in the second embodiment has a molecular weight of at least 500, preferably about 1000 to 5000. When the molecular weight of the diene polymer is too low, the adhesion will be poor, while when it is too high, the resulting primer will be so viscous as to give a coating weight exceeding the optimum quantity to an adherend. The optimum coating weight of the acid-modified diene polymer on a steel plate is about 0.2 to 2.5 mg/cm², preferably 0.3 to 1.5 mg/cm².

The aliphatic amine compound or ammonia used in the second embodiment forms a salt with an acid-modified diene polymer through the reaction with the carboxyl group of the polymer to enhance the solubility of the polymer in water. The salt thus formed is decomposed in the baking step into an aliphatic amine compound or ammonia, which is released from the system. Accordingly, the aliphatic amine compound to be used in the second embodiment is not particularly limited but may be any low-molecular weight one. However, an aliphatic polyamine compound having two or more amino groups forms a salt with two or more acid-modified diene polymer molecules to cause gelation, thus precipitating the polymer. Accordingly, the use of an aliphatic monoamine compound is preferable.

The aliphatic amine compound to be used in the second embodiment may be any of primary, secondary and tertiary ones. However, the use of a primary or secondary aliphatic amine compound often gives a primer coat problematic in water resistance, because such an amine compound is liable to form hydrophilic amide group with the carboxyl group of the polymer through dehydration in the drying or baking step. Therefore, the use of a tertiary amine compound is preferable.

Specific examples of the aliphatic amine compound to be used in the second embodiment include allylamines, isopropylamines, ethylamines, isobutylamines, n-butylamines, sec-butylamines, t-butylamines, n-propylamines, 2-ethyl-hexylamines, morpholines, piperidines and amino alcohols. Amino alcohols such as N,N-dimethylaminoethanol and N,N-diethyl-aminoethanol are particularly desirable from the standpoints of stability of the amine in aqueous solution and volatility in the drying and baking steps. Alternatively, ammonia may be used instead of the aliphatic amine compound.

The aromatic polyamine compound to be used in the second embodiment is an aromatic organic compound having two or more amino groups directly bonded to the aromatic ring and/or nitrogen atoms incorporated in the aromatic ring. The aromatic polyamine compound is required to be so lowly volatile as not to evaporate away in the baking step, because the compound is used to crosslink the polymer in the baking step. Although the amino groups of the aromatic polyamine compound may be each any of primary, secondary and tertiary ones, it is preferable that the amino groups be primary and/or secondary ones which can react with carboxyl group to form amide and/or imide groups. Since the basicity of an aromatic amine compound is lower than that of an aliphatic amine compound, the addition of an aromatic amine compound having two or more amino groups does not cause the precipitation of the acid-modified diene polymer, so far as the amino group of an aliphatic amine compound is present in an amount by equivalent equal to or exceeding that of the carboxyl group of the polymer.

Specific examples of the aromatic polyamine compound to be used in the second embodiment include phenylenediamines, toluylenediamines, diaminodiphenylmethanes, diaminodiphenyl ethers, diaminobenzanilides, diaminodiphenyl sulfones, dianisidines, aminopyridines, imidazoles, melamines, pyrazines and guanamines. Toluylenediamines, diaminodiphenylmethanes, diaminodiphenyl ethers, diaminobenzanilides and diaminodiphenyl sulfones are particularly preferable from the standpoints of reactivity with carboxyl group, volatility and water resistance of primer layer.

In the primer of the second embodiment, an organic amine compound or ammonia, an aromatic polyamine compound and water are used in amounts of 5 to 50 parts by weight (preferably 15 to 30 parts by weight), 3 to 30 parts by weight (preferably 5 to 20 parts by weight) and 300 to 1500 parts by weight (preferably 400 to 900 parts by weight), respectively, per 100 parts by weight of the acid-modified diene polymer used. In practice, it is preferable to regulate the amounts of the components within the above ranges in consideration of dispersion stability of the primer, reduction of drying time and selection of solid content.

Although the addition of an aromatic polyamine compound remarkably enhances the water resistance of the primer layer, the additional use of an inorganic filler is effective in the case necessitating still higher water resistance. It is believed that the addition of an inorganic filler lowers the coefficient of thermal expansion of the primer layer to thereby relax the shrinking stress, thus retarding the lowering in adhesion occurring during the immersion in hot water.

The inorganic filler to be used in the second embodiment is preferably one having an isoelectric point of 7 or larger on the surface thereof and being difficulty reactive with water, and examples of such an inorganic filler include oxides and hydroxides of various metals and carbon blacks. Specific examples of the filler usable in the second embodiment include zinc oxide, iron oxide, copper oxide, nickel oxide, cobalt oxide, tin oxide and various carbon blacks.

Such an inorganic filler is negatively charged on the surface thereof in an atmosphere having a pH not exceeding the isoelectric point of the filler owing to the functional groups present on the surface or the formation of a metal hydroxide by hydration, and therefore forms strong interaction with carboxylic acid in such an atmosphere (H. Murase, "Shiki-zai (Coloring Materials)", 60, 225 (1987)).

It has been known that an article of metal coated with a primer comprising a diene polymer is baked, the diene polymer reacts with atmospheric oxygen to form carboxylic groups. Accordingly, when such baking is conducted in the presence of an inorganic filler negatively charged on the surface thereof, a primer coat wherein the diene polymer is strongly bonded to the inorganic filler is formed, which is believed to be contributory to enhancement in the adhesivity.

Although the optimum amount of the inorganic filler to be added varies depending upon the water resistance required and the ratio to the aromatic polyamine compound, it is 20 to 120 parts by weight, preferably 50 to 90 parts by weight, per 100 parts by weight of the diene polymer. When the amount is smaller than 20 parts by weight, the resulting primer coat will little be lowered in coefficient of thermal expansion to fail in relaxing the shrinking stress sufficiently, thus failing in attaining sufficient water resistance. When the amount exceeds 120 parts by weight, not only no stable dispersion will be obtained but also the baked primer layer will be brittle to result in poor bonding properties.

The water-based primer of the second embodiment may contain other additional components. For example, ethyl cellosolve, butyl cellosolve or the like may be added to the primer as an additive for improving the wettability and fluidity exhibited when the primer is applied to a metal. Further, a small amount of a water-soluble rust preventive may be added to prevent excessive rusting.

Further, cobalt or manganese ion may be added to the primer solution for the purpose of accelerating the oxidation in the baking step. It is suitable that the cobalt or manganese ion is added as a compound uniformly soluble in the primer solution, for example, cobalt naphthenate or cobalt octanoate. It is suitable that cobalt and magnesium ions are used in a sum total of 0.01 to 1.00 part by weight, preferably 0.05 to 0.6 part by weight, per 100 parts by weight of the acid-modified diene polymer used.

The process for producing a polymer-coated article of metal by the use of the powder coating primer of the second embodiment according to the present invention comprises uniformly applying the primer to an optionally degreased article of metal by a conventional method such as dipping, drying the primer coat, baking the resultant by the use of a heating means such as high-frequency induction heating or electric oven, and coating the resulting article on the surface with a polymer by the fluidized bed dip coating method or the electrostatic coating method.

The primer applied on an article of metal is oxidized with atmospheric oxygen in the baking step to form active groups. When the baking conditions are too mild, the formation of the active groups will be insufficient, while when they are too severe, the primer will be carbonized to result in poor adhesivity. The baking temperature is suitably 250 to 400°C. Although the baking time varies depending on the baking temperature, it is 4 to 10 minutes at a baking temperature of 350°C.

The coating polymer usable in the second embodiment includes thermoplastic resins such as polyamide, polyolefin, polyester, polyvinyl chloride and fluorocarbon resins, and thermosetting resins such as epoxy resins, though the coating polymer is not limited to them.

Further, various industrial metal materials such as iron, steel, aluminum and zinc can be used as the material of the article used in the second embodiment.

The amine precursor to be used in the third embodiment of the present invention is a compound which can generate a polyamine compound by heating. When such an amine precursor is added to a primer comprising a partially acid-modified diene polymer, an aliphatic amine compound or ammonia and an aqueous medium, the carboxyl and/or acid anhydride groups contained in the acid-modified diene polymer and/or the active groups (such as carboxyl and epoxy groups) formed by the oxidation of double bond react with the polyamine compound formed by the thermal decomposition of the precursor in the baking step to form amide, imide and/or amine linkages among polymer molecules, by which a firm crosslinked primer layer can be formed. In general, the introduction of a crosslinked structure to a coating film enhances the mechanical strengths of the film to thereby improve the resistance thereof to internal stress, consequently improving the adhesion of the film to a substrate.

The amine precursor used in the third embodiment must be inert to acid-modified polybutadiene in an aqueous solution to cause neither gelation nor precipitation, while the precursor must remain in the coat in the baking step even after the evaporation of water and the aliphatic amine compound or ammonia and must be thermally decomposed to generate a polyamine compound contributing to the crosslinking. Since acid-modified polybutadiene is dispersed in water by forming a salt with an aliphatic amine compound or ammonia, it is necessary that the basicity of the amine precursor is lower than that of the aliphatic amine compound or ammonia. Further, it is desirable that the precursor exhibits high dispersibility in water or is soluble in water.

Specifically, the amine precursor is a compound which can generate a compound having two or more reactive amino groups, e.g., melamine or ethylenediamine or the like, and examples of such a compound include urea, thiourea, ethyleneurea, ethylenethiourea, dicyandiamide and trimethylolmelamine though the precursor is not limited to them. Urea, ethyleneurea and dicyandiamide are particularly desirable from the standpoint of basicity, volatility, decomposability, hydrophilicity, improvement in adhesion, toxicity, stability in aqueous solution, cost and so on.

The amount of the amine precursor to be used in the third embodiment of the present invention is 1 to 30 parts by weight per 100 parts by weight of the acid-modified diene polymer. When the amount is smaller than one part by weight, no improvement in the adhesion will be recognized, while when it exceeds 30 parts by weight, the resulting primer coat will be poor in water resistance owing to its enhanced polarity in the primer layer.

The acid-modified diene polymer to be used in the third embodiment of the present invention is a polymer prepared by copolymerizing a compound having conjugated double bonds, e.g., butadiene or isoprene, with a carboxylic acid or carboxylic acid anhydride such as acrylic acid, methacrylic acid, maleic anhydride or the like, or by polymerizing a compound having conjugated double bonds and treating the obtained polymer with maleic anhydride or the like.

In the third embodiment, carboxylic acid units are introduced into a diene polymer in order to enable the dispersion of the polymer in water, and the amount of the acid units introduced is preferably within such a range as to give an acid value of 5 to 500 mgKOH/g. When the acid value of the polymer is lower than 5 mgKOH/g, the resulting polymer will be poor in water solubility even in the form of a salt with an amine compound or ammonia to fail in forming a stable aqueous solution. On the other hand, when the acid value exceeds 500 mgKOH/g, not only an acid-modified diene polymer having such an acid value will be difficult of production but also the adhesion after treatment with hot water will be unfavorably poor because of the too high hydrophilicity of the primer layer.

It is suitable that the acid-modified diene polymer to be used in the third embodiment has a molecular weight of at least 500, preferably about 1000 to 5000. When the molecular weight of the polymer is too low, the adhesion will be poor, while when it is too high, the resulting primer will be so viscous as to give a coating weight exceeding the optimum quantity to an adherend. The optimum coating weight of the acid-modified diene polymer on a steel plate is about 0.2 to 2.5 mg/cm², preferably 0.3 to 1.5 mg/cm².

The aliphatic amine compound or ammonia used in the third embodiment forms a salt with an acid-modified diene polymer through the reaction with the carboxyl group of the polymer to enhance the solubility of the polymer in water. The salt thus formed is decomposed in the drying or baking step into an aliphatic amine compound, which is discharged from the system. Accordingly, the aliphatic amine compound to be used in the third embodiment is not particularly limited but may be any low-molecular weight one. However, an aliphatic polyamine compound having two or more amino groups forms a salt with two or more of acid-modified diene polymer molecules to cause gelation, thus precipitating the polymer. Accordingly, the use of an aliphatic monoamine compound is preferable.

The aliphatic amine compound to be used in the third embodiment may be any of primary, secondary and tertiary ones. However, the use of a primary or secondary aliphatic amine compound often gives a primer layer problematic in water resistance, because such an amine compound is liable to form a hydrophilic amide group with the carboxyl group of the polymer through dehydration in the drying or baking step. Therefore, the use of a tertiary amine compound is preferable. Specific examples of the aliphatic amine compound to be used in the third embodiment include allylamines, isopropylamines, ethylamines, isobutylamines, n-butylamines, sec-butylamines, t-butylamines, n-propylamines, 2-ethylhexylamines, morpholines, piperidines and amino alcohols. Amino alcohols such as N,N-dimethylaminoethanol and N,N-diethylaminoethanol are particularly desirable from the standpoints of stability of the amine in an aqueous solution and volatility in the drying and baking steps. Alternatively, ammonia may be used instead of the aliphatic amine compound.

In the third embodiment, the addition of an amine precursor brings about remarkable improvement in the water resistance. However, it is effective in the case necessitating still higher water resistance to use an inorganic filler additionally. It is believed that the addition of an inorganic filler lowers the coefficient of thermal expansion of the primer layer to thereby relax the concentration of stress at the interface efficiently, thus retarding the lowering in adhesion occurring during the immersion in hot water.

The inorganic filler to be used in the third embodiment of the present invention is preferably one being hardly reactive with water, and examples thereof include oxides and hydroxides of various metals and carbon blacks. Specific examples of the usable filler include zinc oxide, iron oxide, copper oxide, nickel oxide, cobalt oxide, tin oxide and various carbon blacks. Although the optimum amount of the inorganic filler used varies depending upon the water resistance required, the ratio to the amine precursor and so on, it is 20 to 120 parts by weight, preferably 50 to 90 parts by weight, per 100 parts by weight of the diene polymer.

The water-based primer of the third embodiment may further contain other components. For example, ethyl cellosolve, butyl cellosolve or the like may be added to the primer as an additive for improving the wettability and fluidity exhibited when the primer is applied to a metal. Further, a small amount of a water-soluble rust preventive may be added to prevent excessive rusting. Furthermore, a small amount of an antioxidant may be added to inhibit the oxidation of the diene polymer.

Further, cobalt or manganese ion may be added to the primer solution for the purpose of accelerating the oxidation in the baking step. It is suitable that the cobalt or manganese ion is added as a compound uniformly soluble in the aqueous primer solution, for example, cobalt naphthenate or cobalt octanoate. It is suitable that cobalt and magnesium ions are used in a sum total of 0.01 to 1.00 part by weight, preferably 0.05 to 0.6 part by weight, per 100 parts by weight of the acid-modified diene polymer used.

A suitable crosslinking catalyst such as an amine, an acid or a salt may also be added to the primer solution to accelerate the crosslinking in the baking step, though the crosslinking proceeds at a sufficiently high rate even without any catalyst. The catalyst must remain in the primer coat during the baking step, so that a little-volatile one is selected. The addition of an acid in too large an amount lowers the pH of the primer to cause the precipitation of the polymer. Accordingly, the amount of the acid or salt to be added must be determined within such an range that the resulting primer has a pH of 7 or above. Phosphoric acid and sulfuric acid are used as the acid from the standpoints of volatility and so on, while ammonium phosphate and ammonium sulfate are selected as the salt. Further, it is preferable to use a lowly volatile tertiary amine compound such as dimethylaminopyridine, dimethylbenzylamine or triethanolamine as the amine.

The process for producing a polymer-coated article of metal by the use of the powder coating primer of the third embodiment according to the present invention comprises uniformly applying the primer to an optionally degreased article of metal by a conventional method such as dipping, drying the primer layer, baking the resultant by the use of a heating means such as high-frequency induction heating or an electric oven, and coating the resulting article on the surface with a polymer by the fluidized bed dip coating method or the electrostatic coating method.

The primer applied on an article of metal is oxidized with atmospheric oxygen in the baking step to form active groups. When the baking conditions are too mild, the formation of the active groups will be insufficient, while when they are too severe, the primer will be carbonized to result in poor bonding properties. The baking temperature is suitably 250 to 400°C, preferably 300 to 380°C. Although the baking time varies depending on the baking temperature, it is 4 to 10 minutes at a baking temperature of 350°C.

The coating polymer usable in the third embodiment includes thermoplastic resins such as polyamide, polyolefin, polyester, polyvinyl chloride and fluorocarbon resins, and thermosetting resins such as epoxy resins.

Further, various industrial metal materials such as iron, steel, aluminum and zinc can be used as the material of the article used in the third embodiment.

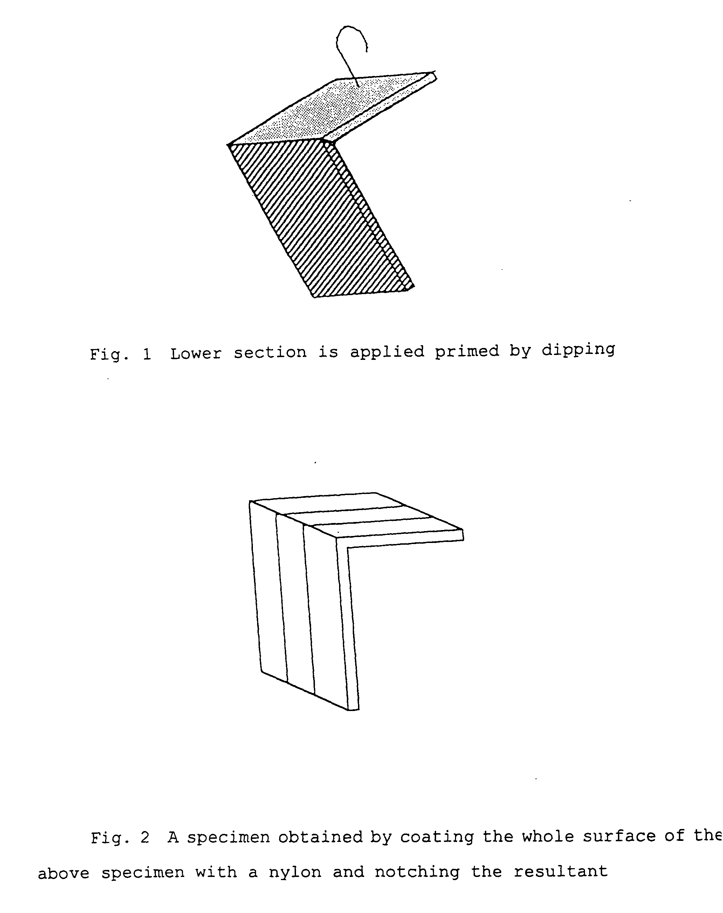

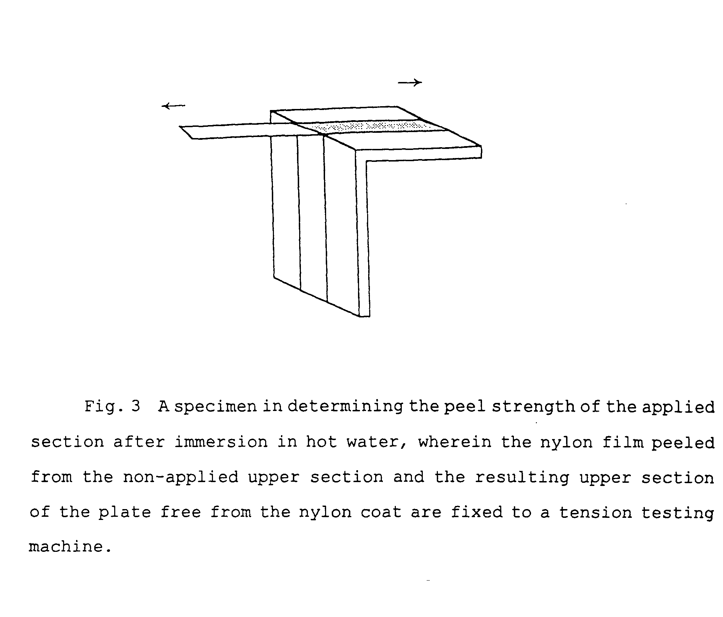

Fig. 1 shows a specimen for peel test which is an "L"-shape steel plate whose lower section is applied primed by dipping; Fig. 2 a specimen obtained by coating the whole surface of the above specimen with a nylon and notching the resultant; and Fig. 3 a specimen in determining the peel strength of the applied section after immersion in hot water, wherein the nylon film peeled from the non-applied upper section and the resulting upper section of the plate free from the nylon coat are fixed to a tension testing machine.

The present invention will now be described in detail by referring to the following Examples.

### First embodiment

An aqueous solution of a metal chloride having a concentration of 10 m equiv./l was prepared and 20 ml of this solution was put in a beaker. A predetermined amount of an aqueous solution of sodium hydroxide having a concentration of 100 m equiv./l was added into the beaker to determine the rate of electrophoretic movement and the pH. Since no movement of colloidal particles is observed at the isoelectric point of the particles, the determination of the rate of electrophoretic migration was repeated with various amounts of the aqueous solution of sodium hydroxide added, and the pH at which the rate of electrophoretic migration became zero was regarded as the isoelectric point.

In the above determination, the isoelectric point of a metal hydroxide is measured. However, the isoelectric point of a metal hydroxide can be regarded as that of the surface of a metal oxide corresponding to the hydroxide, because the surface of a metal oxide is converted into a hydroxide corresponding thereto through hydration with atmospheric moisture.

In the case using zinc chloride, the rate of electrophoretic migration becomes about zero at the point of time when 2.0 ml of the aqueous solution of sodium hydroxide has been added, and the pH at the point is 9.2. Accordingly, the isoelectric point of zinc oxide is 9.2.

The isoelectric point of carbon black or the like cannot be determined by the above method. In such a case, the pH of an aqueous dispersion of an inorganic filler as determined according to JIS K5101/24 is regarded as the isoelectric point thereof.

### Reference Example 1-1

Liquid polybutadiene B-3000 (a product of Nippon Soda Co., Ltd., MW: ca. 3000, 100 g) was dissolved in 900 g of trichloroethane. Zinc oxide (a product of Nacarai Tesque, reagent of special grade, 70 g) was added to the solution prepared above, followed by sufficient mixing.

An "L"-shape steel plate as shown in Fig. 1 having a lower section of 80 × 70 × 3 mm for evaluating adhesive strength and an upper section of 70 × 70 × 3 mm to be fixed to a tension testing machine was subjected to rust removal and degreasing. The primer prepared above was applied to the lower section of the steel plate for evaluating adhesive strength by dipping, and dried at room temperature for about 10 minutes. The resulting steel plate was heated in an electric oven at 350°C for 7 minutes and dipped in a fluidized bed filled with powdered nylon 12 (Daiamid Z 2073 gray) for 7 seconds. The resulting plate was cooled with air for one minute and with water for several minutes.

The nylon-coated steel plate thus obtained was notched at a space of 15 mm (as shown in Fig. 2) and stored in hot water of 95°C for a predetermined period. As shown in Fig. 3, the nylon coating film on the upper section was peeled from the steel plate and fixed to a tension testing machine. The peel strength was determined at a peel rate of 50 mm/min. This test was repeated three or four times and the average peel strength was calculated. The results are given in Table 1-1.

### Reference Example 1-2

Cupric oxide (a product of Nacarai Tesque, reagent of special grade) was used instead of the zinc oxide in Example 1-1. The results are given in Table 1-1.

### Reference Example 1-3

Stannic oxide (a product of Nacarai Tesque, reagent of special grade) was used instead of the zinc oxide in Example 1-1. The results are given in Table 1-1.

### Reference Example 1-4

Cobalt oxide (a product of Nacarai Tesque, reagent of special grade) was used instead of the zinc oxide in Example 1-1. The results are given in Table 1-1.

### Reference Example 1-5

Molacco H (a product of Columbia Carbon) was used instead of the zinc oxide in Example 1-1. The results are given in Table 1-1.

### Comparative Example 1-1

Liquid polybutadiene B-3000 (a product of Nippon Soda Co., Ltd., MW: ca. 3000, 100 g) was dissolved in 900 g of trichloroethane. In a similar manner to that of Example 1-1, a nylon-coated steel plate was produced by the use of this trichloroethane solution, stored in hot water, and subjected to the tensile test to determined the peel strength. The results are given in Table 1-1.

### Comparative Example 1-2

Silicon oxide (Wakogel, a product of Wako Pure Chemical Industries, Ltd.) was used instead of the zinc oxide in Example 1-1. The results are given in Table 1-1.

### Comparative Example 1-3

Carbon black (Special black 250, a product of Degussa) was used instead of the zinc oxide in Example 1-1. The results are given in Table 1-1.

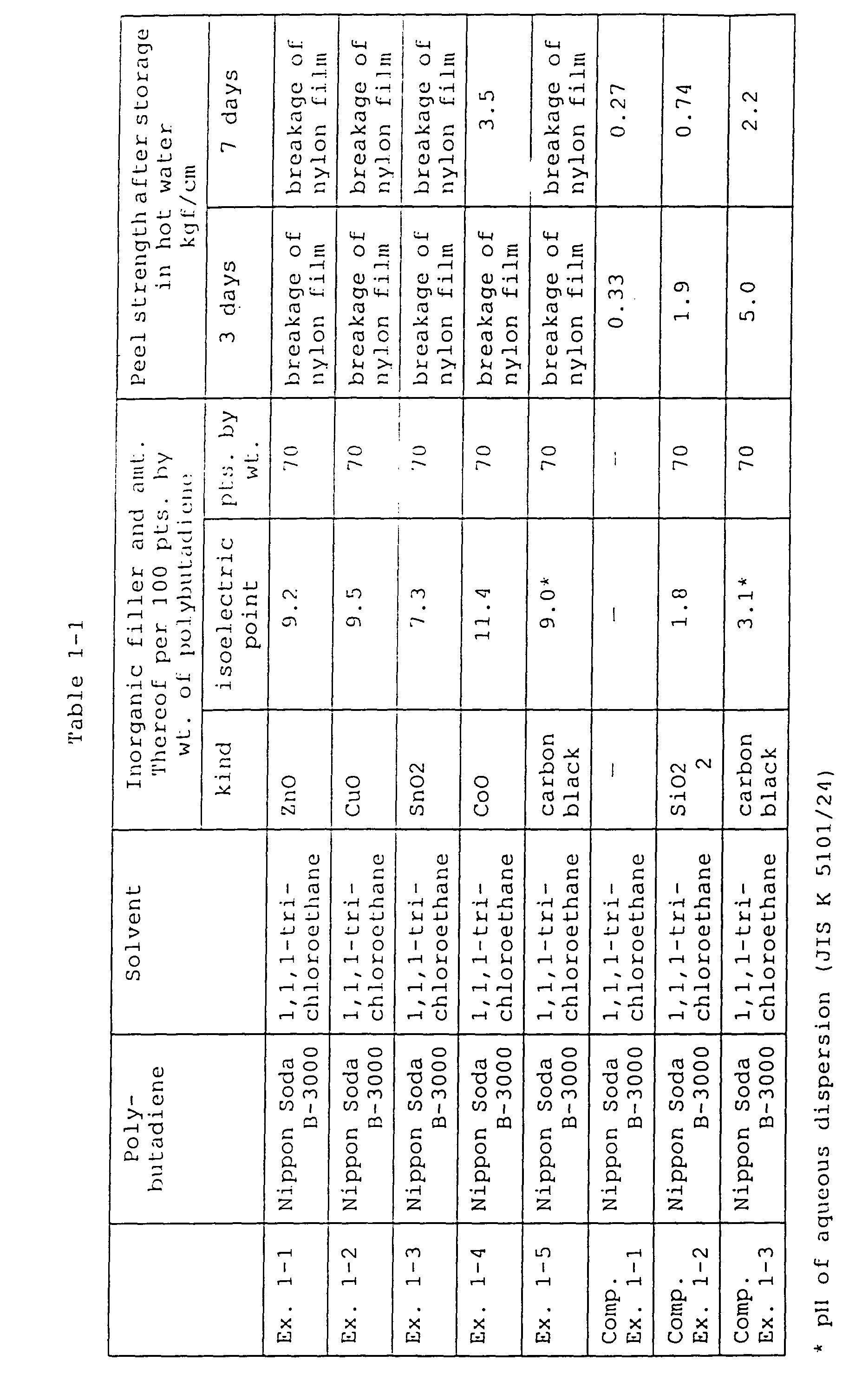

### Example 1-6

Liquid polybutadiene BN-1015 (a product of Nippon Soda Co., Ltd., MW: ca. 1500, acid value: 130 mgKOH/g, 150 g) was homogeneously mixed with 15 ml of dimethylaminoethanol and 30 ml of butyl cellosolve, followed by the addition of 4.5 g of cobalt naphthenate and 850 g of water. Then, 105 g of zinc oxide was added to the mixture thus obtained, and the obtained mixture was uniformly mixed.

An "L"-shape steel plate as shown in Fig. 1 having a lower section of 80 × 70 × 3 mm for evaluating adhesive strength and a upper section of 70 × 70 × 3 mm to be fixed to a tension testing machine was subjected to rust removal and degreasing. The primer prepared above was applied to the lower section of the steel plate for evaluating adhesive strength by dipping, and dried at 80°C for one hour. The resulting steel plate was heated in an electric oven at 350°C for 7 minutes and dipped in a fluidized bed filled with powdered nylon 12 (Daiamid Z 2073 gray) for 7 seconds. The resulting plate was cooled with air for one minute and with water for several minutes.

The nylon-coated steel plate thus obtained was notched at a space of 15 mm (as shown in Fig. 2) and stored in hot water of 95°C for a predetermined period. The nylon coating film on the upper section was peeled from the steel plate and fixed to a tension testing machine. The peel strength was determined at a peel rate of 50 mm/min. This test was repeated three or four times and the average peel strength was calculated. The results are given in Table 1-2.

### Example 1-7

The amount (105 g) of zinc oxide in Example 1-6 was decreased to 75 g. The results are given in Table 1-2.

### Example 1-8

The amount (105 g) of zinc oxide in Example 1-6 was decreased to 30 g. The results are given in Table 1-2.

### Example 1-9

The amount (105 g) of zinc oxide in Example 1-6 was increased to 135 g. The results are given in Table 1-2.

### Example 1-10

Carbon black (Molacco H, a product of Columbian Carbon, 105 g) was used instead of the zinc oxide (105 g) in Example 1-6. The results are given in Table 1-2.

### Comparative Example 1-4

Liquid polybutadiene BN1015 (a product of Nippon Soda Co., Ltd., MW: ca. 1500, acid value: 130 mgKOH/g, 150 g) was homogeneously mixed with 15 ml of dimethylaminoethanol, 30 ml of butyl cellosolve, 4.5 g of cobalt naphthenate and 850 g of water. In a similar manner to that of Example 1-6, a nylon-coated steel plate was produced by the use of the aqueous solution prepared above, stored in hot water and subjected to the tensile test to determine the peel strength. The results are given in Table 1-2.

### Comparative Example 1-5

Carbon black (Special black 250, a product of Degussa, 105 g) was used instead of the zinc oxide (105 g) in Example 1-6. The results are given in Table 1-2.

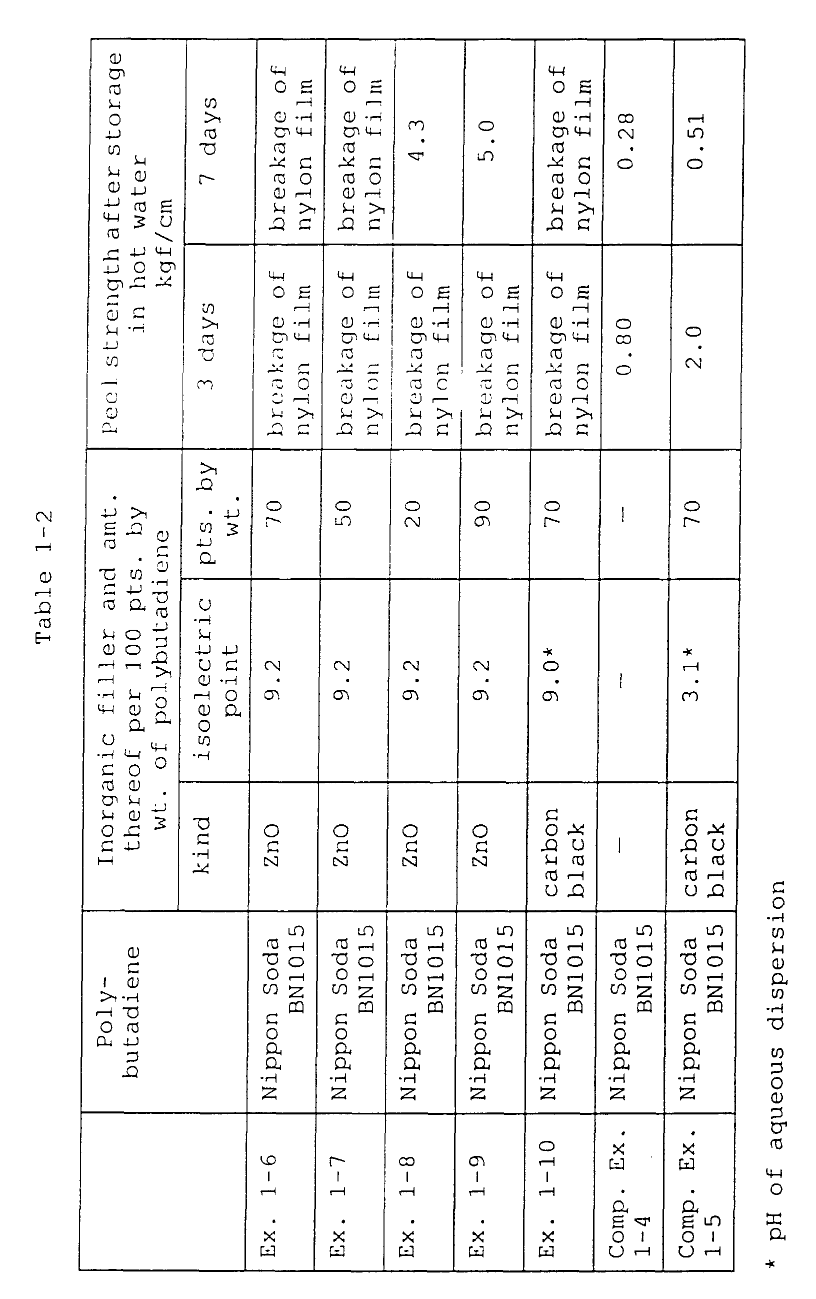

### Example 1-11

Liquid polybutadiene BN1015 (a product of Nippon Soda Co., Ltd., MW: ca. 1500, acid value: 130 mgKOH/g, 150 g) was fully mixed with 30 g of dimethylaminoethanol and 30 g of butyl cellosolve. 4.5 g of cobalt naphthenate, 15 g of urea and 850 g of water were added to the mixture prepared above to form a homogeneous solution. Then, a mixture of 79 g of zinc oxide with 26 g of triiron tetraoxide was added to the homogeneous solution. The obtained mixture was left to stand at room temperature for several days and examined for whether the formed sediment could be re-dispersed by mild agitation or not.

A steel plate was subjected to rust removal and degreasing. The primer prepared above was applied to the resulting steel plate by dipping and dried at 80°C for one hour. The resulting steel plate was heated in an electric oven at 350°C for 7 minutes, dipped in a fluidized bed filled with powdered nylon 12 (Daiamid Z 2073 gray) for 7 seconds and cooled with air for one minute and with water for several minutes. The nylon-coated steel plate thus obtained was stored in hot water of 95°C for a predetermined period, notched with a cutting knife and subjected to the peel test at a peel angle of 90° to determine the adhesion. The results are given in Table 1-3.

### Example 1-12

Another primer was prepared in a similar manner to that of Example 1-11 except that the amounts of zinc oxide and triiron tetraoxide used were changed to 52.5 g and 52.5 g respectively. The other components and the methods for evaluating the dispersibility of filler and adhesion are the same as those of Example 1-11. The results are given in Table 1-3.

### Example 1-13

Another primer was prepared in a similar manner to that of Example 1-11 except that the amounts of zinc oxide and triiron tetraoxide used were changed to 26 g and 79 g respectively. The other components and the methods for evaluating the dispersibility of filler and adhesion are the same as those of Example 1-11. The results are given in Table 1-3.

### Comparative Example 1-6

Another primer was prepared in a similar manner to that of Example 1-6 except that 105 g of zinc oxide was used instead of the mixture of zinc oxide with triiron tetraoxide. The other components and the methods for evaluating the dispersibility of filler and adhesion are the same as those of Example 1-11. The results are given in Table 1-3.

### Comparative Example 1-7

Another primer was prepared in a similar manner to that of Example 1-11 except that 105 g of triiron tetraoxide was used instead of the mixture of zinc oxide with triiron tetraoxide. The other components and the methods for evaluating the dispersibility of filler and adhesion are the same as those of Example 1-11. The results are given in Table 1-3.

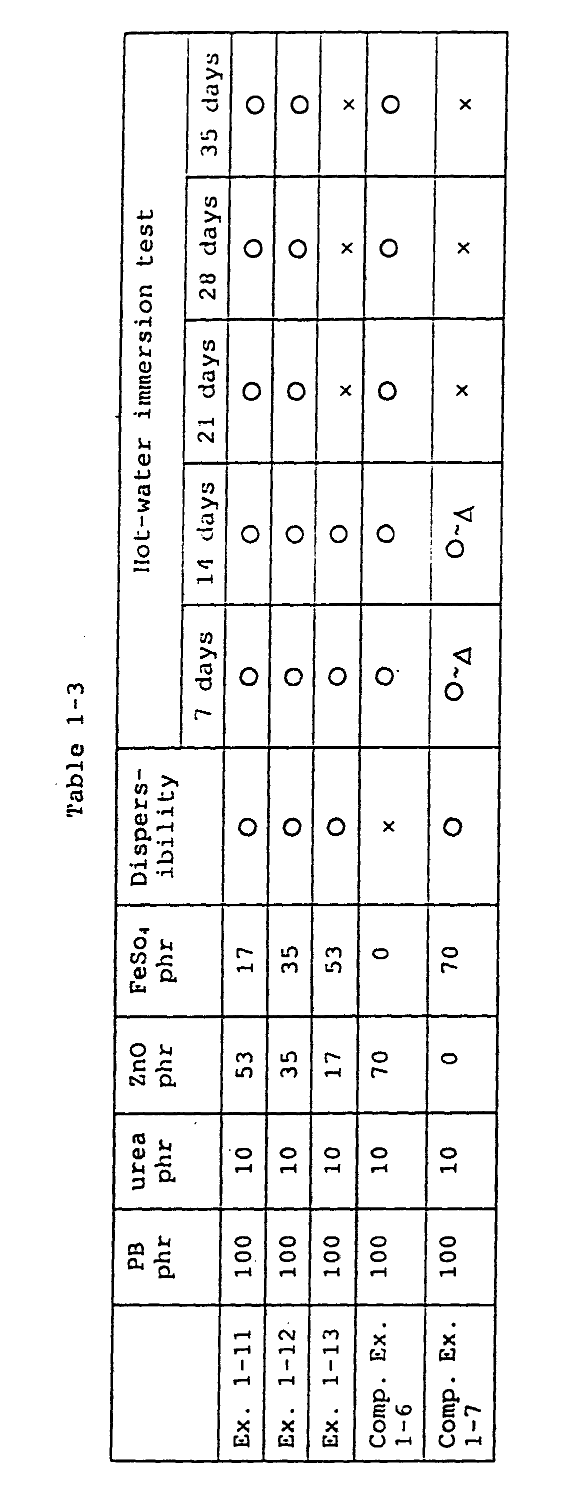

### Notes)

- Adhesion:: ○...not peeled, Δ...partially peeled, ×...peeled
- Basic formulation:: BN1015 100 pts. by wt., dimethylaminoethanol 20 pts. by wt., butyl cellosolve 20 pts. by wt., cobalt naphthenate 3 pts. by wt., water 566 pts. by wt.

### Second embodiment

### Example 2-1

Liquid polybutadiene BN1015 (a product of Nippon Soda Co., Ltd., MW: ca. 1500, acid value: 130 mgKOH/g, 150 g) was sufficiently mixed with 30 g of dimethylaminoethanol and 30 g of butyl cellosolve, followed by the addition of 4.5 g of cobalt naphthenate and 850 g of water. Then, 15 g of 4,4'-diaminodiphenylmethane was added to the homogeneous aqueous solution prepared above, followed by mixing.

A steel plate was subjected to rust removal and degreasing. The primer prepared above was applied to the resulting steel plate by dipping and dried at 80°C for one hour. The resulting steel plate was heated in an electric oven at 350°C for 7 minutes, dipped in a fluidized bed filled with powdered nylon 12 (Daiamid Z 2073 gray) for 7 seconds and cooled with air for one minute and with water for several minutes. The nylon-coated steel plate thus obtained was stored in hot water of 95°C for a predetermined period, notched with a cutting knife and evaluated for adhesion. The results are given in Table 2-1.

### Example 2-2

1,3-Diaminobenzene (m-phenylenediamine, 15 g) was added instead of the 4,4'-diaminodiphenylmethane in Example 2-1. The other components and the method for evaluating adhesion are the same as those of Example 2-1.

### Example 2-3

1,2-Daminobenzene (o-phenylenediamine, 15 g) was added instead of the 4,4'-diaminodiphenylmethane in Example 2-1. The other components and the method for evaluating adhesion are the same as those of Example 2-1.

### Example 2-4

2,4-Diaminotoluene (m-toluylenediamine, 15 g) was added instead of the 4,4'-diaminodiphenylmethane in Example 2-1. The other components and the method for evaluating adhesion are the same as those of Example 2-1.

### Example 2-5

4,4'-Diaminodiphenyl sulfone (15 g) was added instead of the 4,4'-diaminodiphenylmethane in Example 2-1. The other components and the method for evaluating adhesion are the same as those of Example 2-1.

### Example 2-6

4,4'-Diaminodiphenyl ether (15 g) was added instead of the 4,4'-diaminodiphenylmethane in Example 2-1. The other components and the method for evaluating adhesion are the same as those of Example 2-1.

### Example 2-7

Melamine (15 g) was added instead of the 4,4'-diaminodiphenylmethane in Example 2-1. The other components and the method for evaluating adhesion are the same as those of Example 2-1.

### Example 2-8

Benzoguanamine (15 g) was added instead of the 4,4'-diaminodiphehylmethane in Example 2-1. The other components and the method for evaluating adhesion are the same as those of Example 2-1.

### Comparative Example 2-1

Liquid polybutadiene BN1015 (a product of Nippon Soda Co., Ltd., MW: ca. 1500, acid value: 130 mgKOH/g, 150 g) was sufficiently mixed with 30 g of dimethylaminoethanol and 30 g of butyl cellosolve. 4.5 g of cobalt naphthenate and 850 g of water were added to the mixture prepared above to form a homogeneous aqueous solution.

Another nylon-coated steel plate was produced by the use of the primer prepared above and evaluated for adhesion after storage in hot water. The details are the same as those of Example 2-1.

### Comparative Example 2-2

m-Xylylenediamine (15 g) was added instead of the 4,4'-diaminodiphenylmethane in Example 2-1. The other components and the method for evaluating adhesion are the same as those of Example 2-1.

### Comparative Example 2-3

Polyallylamine (a product of Nitto Boseki Co., Ltd., MW: ca. 10000, 15 g) was added instead of the 4,4'-diaminodiphenylmethane in Example 2-1. The other components and the method for evaluating adhesion are the same as those of Example 2-1.

### Example 2-9

Liquid polybutadiene BN1015 (a product of Nippon Soda Co., Ltd., MW: ca. 1500, acid value: 130 mgKOH/g, 150 g) was sufficiently mixed with 30 g of dimethylaminoethanol and 30 g of butyl cellosolve, followed by the addition of 4.5 g of cobalt naphthenate and 850 g of water. Then, 15 g of 4,4'-diaminodiphenylmethane and 105 g of zinc oxide were added to the homogeneous aqueous solution prepared above, followed by mixing.

A steel plate was subjected to rust removal and degreasing. The primer prepared above was applied to the resulting steel plate by dipping and dried at 80°C for one hour. The resulting steel plate was heated in an electric oven at 350°C for 7 minutes, dipped in a fluidized bed filled with powdered nylon 12 (Daiamid Z 2073 gray) for 7 seconds and cooled with air for one minute and with water for several minutes. The nylon-coated steel plate thus obtained was immersed in hot water of 95°C for a predetermined period, notched with a cutting knife and evaluated for adhesion. The results are given in Table 2-2.

### Example 2-10

1,3-Diaminobenzene (m-phenylenediamine, 15 g) was added instead of the 4,4'-diaminodiphenylmethane in Example 2-9.

### Example 2-11

4,4'-Diaminodiphenyl sulfone (15 g) was added instead of the 4,4'-diaminodiphenylmethane in Example 2-9.

### Example 2-12

4,4'-Diaminodiphenyl ether (15 g) was added instead of the 4,4'-diaminodiphenylmethane in Example 2-9.

### Example 2-13

2,4-Diaminotoluene (m-toluylenediamine, 15 g) was added instead of the 4,4'-diaminodiphenylmethane in Example 2-9.

### Example 2-14

Molacco H (a product of Columbia Carbon, 105 g) was added instead of the zinc oxide in Example 2-9.

### Comparative Example 2-4

Liquid polybutadiene BN1015 (a product of Nippon Soda Co., Ltd., MW: ca. 1500, acid value: 130 mgKOH/g, 150 g) was sufficiently mixed with 30 g of dimethylaminoethanol and 30 g of butyl cellosolve, followed by the addition of 4.5 g of cobalt naphthenate and 850 g of water. Then, 105 g of zinc oxide was added to the homogeneous aqueous solution prepared above, followed by mixing.

A steel plate was subjected to rust removal and degreasing. The primer prepared above was applied to the resulting steel plate by dipping and dried at 80°C for one hour. The resulting steel plate was heated in an electric oven at 350°C for 7 minutes, dipped in a fluidized bed filled with powdered nylon 12 (Daiamid Z 2073 gray) for 7 seconds and cooled with air for one minute and with water for several minutes. The nylon-coated steel plate thus obtained was immersed in hot water of 95°C for a predetermined period, notched with a cutting knife and evaluated for adhesion. The results are given in Table 2-2.

### Comparative Example 2-5

Molacco H (a product of Columbia Carbon, 105 g) was added instead of the zinc oxide in Comparative Example 2-4.

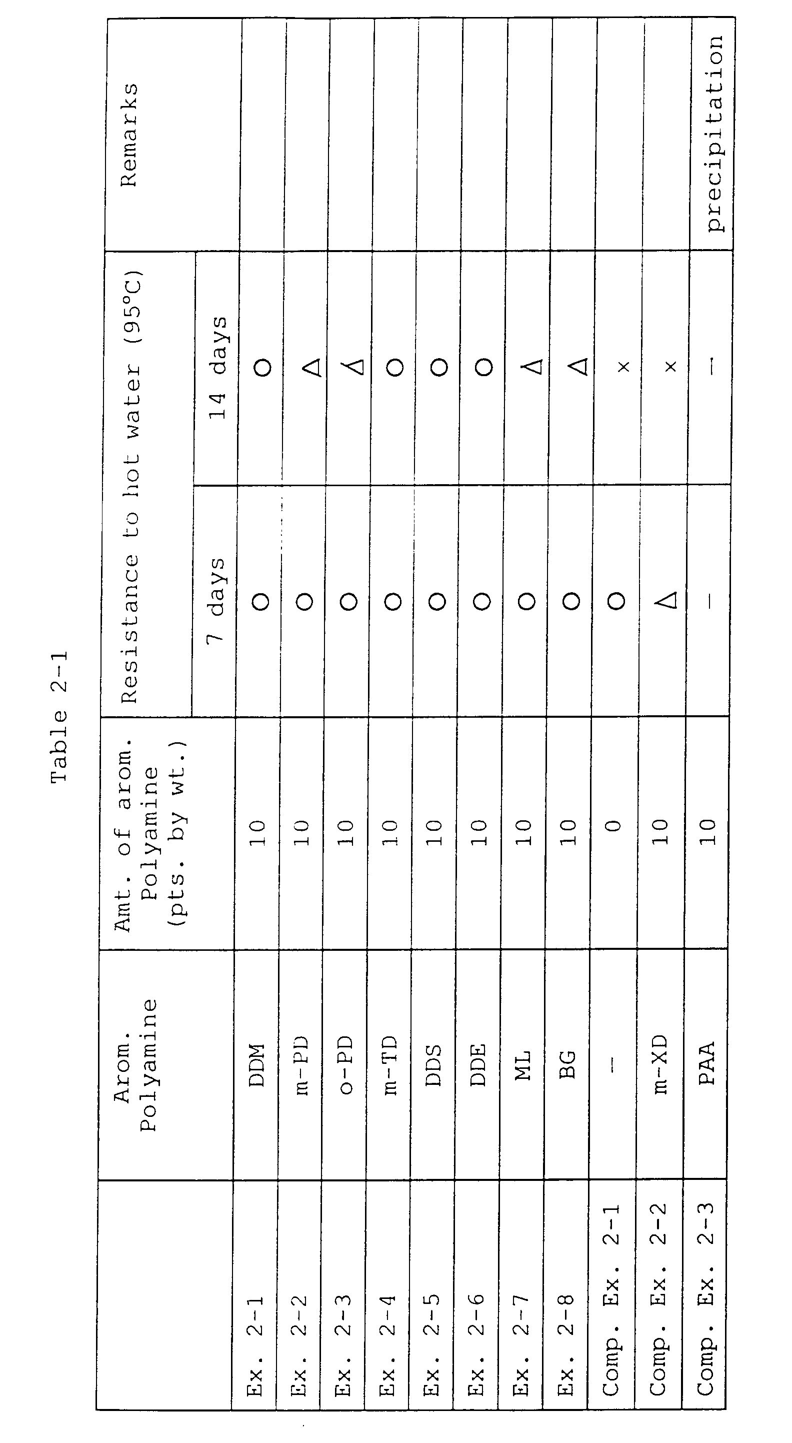

### Notes)

- Adhesion:: ○... not peeled, Δ...partially peeled, ×...peeled
- Basic formulation:: BN1015 100 pts. by wt., dimethylaminoethanol 20 pts. by wt., butyl cellosolve 20 pts. by wt., cobalt naphthenate 3 pts. by wt., water 566 pts. by wt.

### Abbreviations:

- DDM: 4,4'-diaminodiphenylmethane
- ML: melamine
- m-PD: 1,3-diaminobenzene
- BG: benzoguanamine
- o-PD: 1,2-diaminobenzene
- m-XD: m-xylylenediamine
- m-TD: 2,4-diaminotoluene
- PAA: polyallylamine
- DDS: 4,4'-diaminodiphenyl sulfone
- DDE: 4,4'-diaminodiphenyl ether

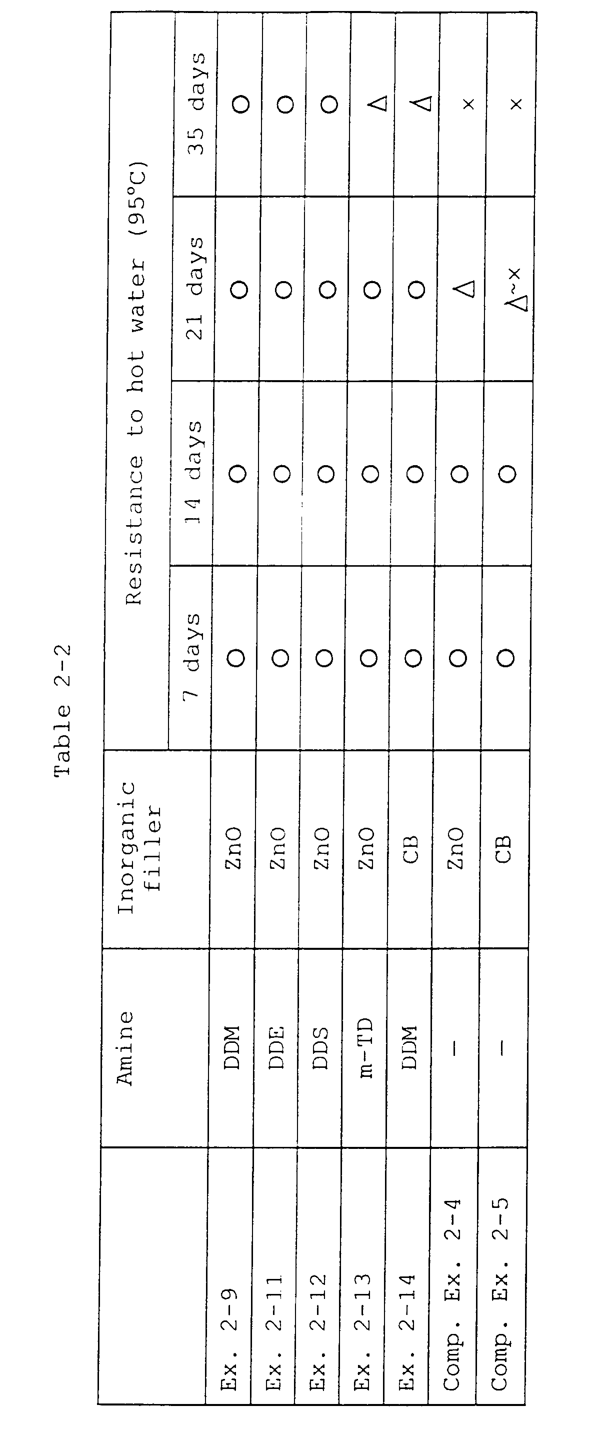

### Notes)

- Adhesion:: ○...not peeled, Δ...partially peeled, ×...peeled
- Basic formulation:: BN1015 100 pts. by wt., dimethylaminoethanol 20 pts. by wt., butyl cellosolve 20 pts. by wt., cobalt naphthenate 3 pts. by wt., inorganic filler 70 pts. by wt., aromatic amine 10 pts. by wt., water 566 pts. by wt.

### Abbreviations:

- DDM: 4,4'-diaminodiphenylmethane
- m-PD: 1,3-diaminobenzene
- m-TD: 2,4-diaminotoluene
- DDS: 4,4'-diaminodiphenyl sulfone
- DDE: 4,4'-diaminodiphenyl ether
- CB: carbon black

### Third embodiment

### Example 3-1

Liquid polybutadiene BN1015 (a product of Nippon Soda Co., Ltd., MW: ca. 1500, acid value: 130 mgKOH/g, 150 g) was sufficiently mixed with 30 g of dimethylaminoethanol and 30 g of butyl cellosolve, followed by the addition of 4.5 g of cobalt naphthenate and 850 g of water. Then, 15 g of urea was added to the homogeneous aqueous solution prepared above, followed by mixing.

A steel plate was subjected to rust removal and degreasing. The primer prepared above was applied to the resulting steel plate by dipping and dried at 80°C for one hour. The resulting steel plate was heated in an electric oven at 350°C for 7 minutes, dipped in a fluidized bed filled with powdered nylon 12 (Daiamid Z 2073 gray) for 7 seconds and cooled with air for one minute and with water for several minutes. The nylon-coated steel plate thus obtained was stored in hot water of 95°C for a predetermined period, notched with a cutting knife and evaluated for adhesion by the peel test at a peel angle of 90°. The results are given in Table 3-1.

### Example 3-2

Ethyleneurea (15 g) was added instead of the urea in Example 3-1. The other components and the method for evaluating adhesion are the same as those of Example 3-1. The results are given in Table 3-1.

### Example 3-3

Ethylenethiourea (15 g) was added instead of the urea in Example 3-1. The other components and the method for evaluating adhesion are the same as those of Example 3-1. The results are given in Table 3-1.

### Example 3-4

Dicyandiamide (15 g) was added instead of the urea in Example 3-1. The other components and the method for evaluating adhesion are the same as those of Example 3-1. The results are given in Table 3-1.

### Example 3-5

Hexamethoxymethylolmelamine (15g) was added instead of the urea in Example 3-1. The other components and the method for evaluating adhesion are the same as those of Example 3-1. The results are given in Table 3-1.

### Example 3-6

The amount (15 g) of urea in Example 3-1 was increased to 45 g. The other components and the method for evaluating adhesion are the same as those of Example 3-1. The results are given in Table 3-1.

### Example 3-7

The amount (15 g) of urea in Example 3-1 was increased to 30 g. The other components and the method for evaluating adhesion are the same as those of Example 3-1. The results are given in Table 3-1.

### Example 3-8

The amount (15 g) of urea in Example 3-1 was decreased to 5 g. The other components and the method for evaluating adhesion are the same as those of Example 3-1. The results are given in Table 3-1.

### Comparative Example 3-1

Liquid polybutadiene BN1015 (a product of Nippon Soda Co., Ltd., MW: ca. 1500, acid value: 130 mgKOH/g, 150 g) was sufficiently mixed with 30 g of dimethylaminoethanol and 30 g of butyl cellosolve. 4.5 g of cobalt naphthenate and 850 g of water were added to the mixture prepared above to form a homogeneous aqueous solution.

Another nylon-coated steel plate was produced by the use of the primer prepared above and evaluated for adhesion after immersion in hot water. The details of the method for evaluating the adhesion are the same as those of Example 3-1. The results are given in Table 3-1.

### Comparative Example 3-2

Glycine dimer (15 g) was added instead of the urea in Example 3-1. The other components and the method for evaluating adhesion are the same as those of Example 3-1. The results are given in Table 3-1.

### Comparative Example 3-3

Cyanuric acid (15 g) was added instead of the urea in Example 3-1. The other components and the method for evaluating adhesion are the same as those of Example 3-1. The results are given in Table 3-1.

### Example 3-9

Liquid polybutadiene BN1015 (a product of Nippon Soda Co., Ltd., MW: ca. 1500, acid value: 130 mgKOH/g, 150 g) was sufficiently mixed with 30 g of dimethylaminoethanol and 30 g of butyl cellosolve, followed by the addition of 4.5 g of cobalt naphthenate and 850 g of water. Then, 15 g of urea and 105 g of zinc oxide were added to the homogeneous aqueous solution prepared above, followed by mixing.

A steel plate was subjected to rust removal and degreasing. The primer prepared above was applied to the resulting steel plate by dipping and dried at 80°C for one hour. The resulting steel plate was heated in an electric oven at 350°C for 7 minutes, dipped in a fluidized bed filled with powdered nylon 12 (Daiamid Z 2073 gray) for 7 seconds and cooled with air for one minute and with water for several minutes. The nylon-coated steel plate thus obtained was stored in hot water of 95°C for a predetermined period, notched with a cutting knife and evaluated for adhesion by the peel test at a peel angle of 90°. The results are given in Table 3-2.

### Example 3-10

Ethyleneurea (15 g) was added instead of the urea in Example 3-9. The other components and the method for evaluating adhesion are the same as those of Example 3-1. The results are given in Table 3-2.

### Example 3-11

Ethylenethiourea (15 g) was added instead of the urea in Example 3-9. The other components and the method for evaluating adhesion are the same as those of Example 3-1. The results are given in Table 3-2.

### Example 3-12

Dicyandiamide (15 g) was added instead of the urea in Example 3-9. The other components and the method for evaluating adhesion are the same as those of Example 3-1. The results are given in Table 3-2.

### Example 3-13

The amount of urea in Example 3-9 was increased to 30 g. The other components and the method for evaluating adhesion are the same as those of Example 3-1. The results are given in Table 3-2.

### Example 3-14

The amount of urea in Example 3-9 was increased to 45 g. The other components and the method for evaluating adhesion are the same as those of Example 3-1. The results are given in Table 3-2.

### Example 3-15

The amount of urea in Example 3-9 was decreased to 7.5 g. The other components and the method for evaluating adhesion are the same as those of Example 3-1. The results are given in Table 3-2.

### Example 3-16

Carbon black (trade name: Molacco H, a product of Columbia Carbon, 105 g) was added instead of the zinc oxide. The other components and the method for evaluating adhesion are the same as those of Example 3-1. The results are given in Table 3-2.

### Comparative Example 3-4

Liquid polybutadiene BN1015 (a product of Nippon Soda Co., Ltd., MW: ca. 1500, acid value: 130 mgKOH/g, 150 g) was sufficiently mixed with 30 g of dimethylaminoethanol and 30 g of butyl cellosolve. 4.5 g of cobalt naphthenate and 850 g of water were added to the mixture prepared above to form a homogeneous aqueous solution. Further, 105 g of zinc oxide was added to the solution, followed by mixing.

A steel place was subjected to rust removal and degreasing. The primer prepared above was applied to the resulting steel plate by dipping and dried at 80°C for one hour. The resulting steel plate was heated in an electric oven at 350°C for 7 minutes, dipped in a fluidized bed filled with powdered nylon 12 (trade name: Daiamid Z 2073 gray, a product of Daicel-Huels Ltd.) for 7 seconds and cooled with air for one minute and with water for several minutes. The nylon-coated steel plate thus obtained was stored in hot water of 95°C for a predetermined period, notched with a cutting knife and evaluated for adhesion by the peel test at a peel angle of 90°.

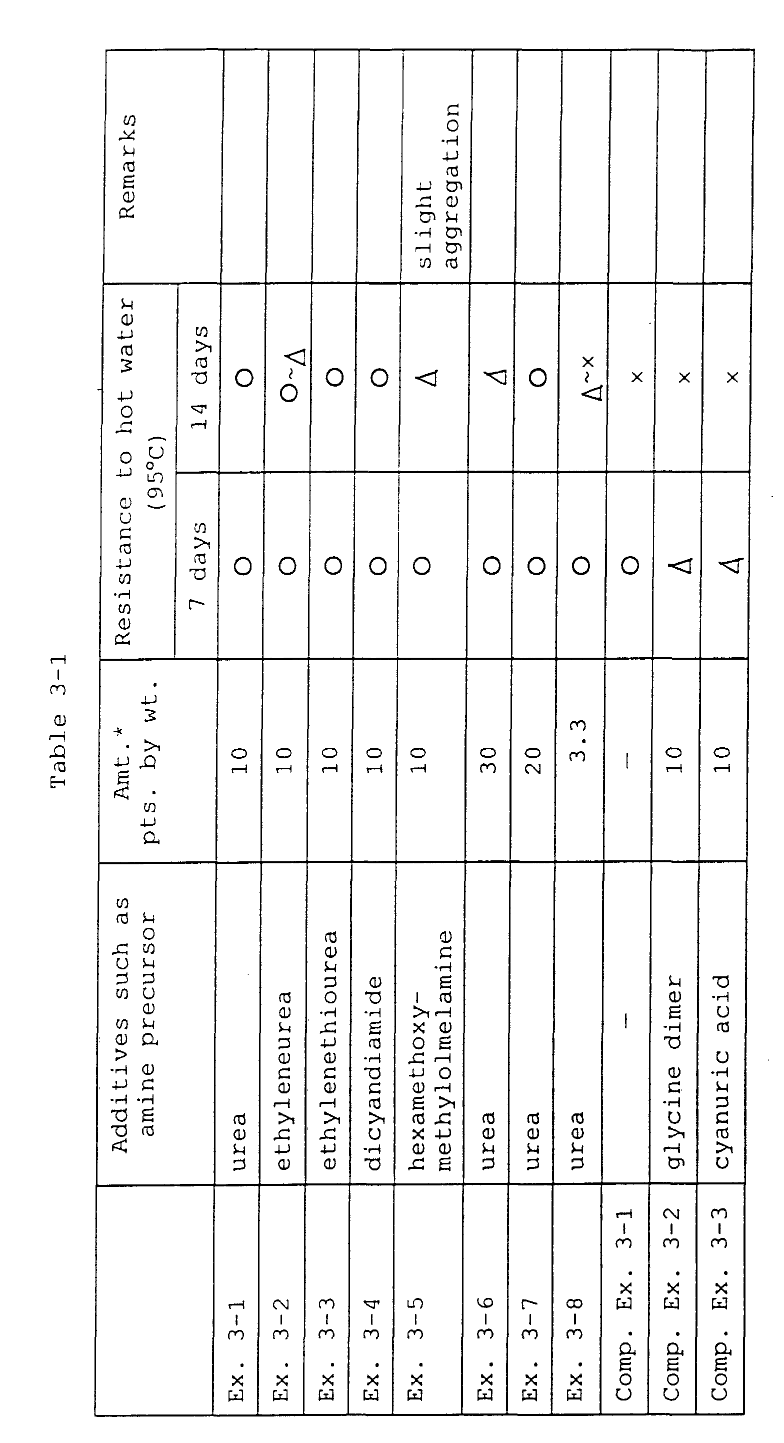

Notes) Adhesion: ○ not peeled, Δ partially peeled, × peeled

### *Basic formulation:

| | |
|---|---|
| BN1015 | 100 pts. by wt. |
| dimethylaminoethanol | 20 pts. by wt. |
| butyl cellosolve | 20 pts. by wt. |
| cobalt naphthenate | 3 pts. by wt. |
| water | 566 pts. by wt. |

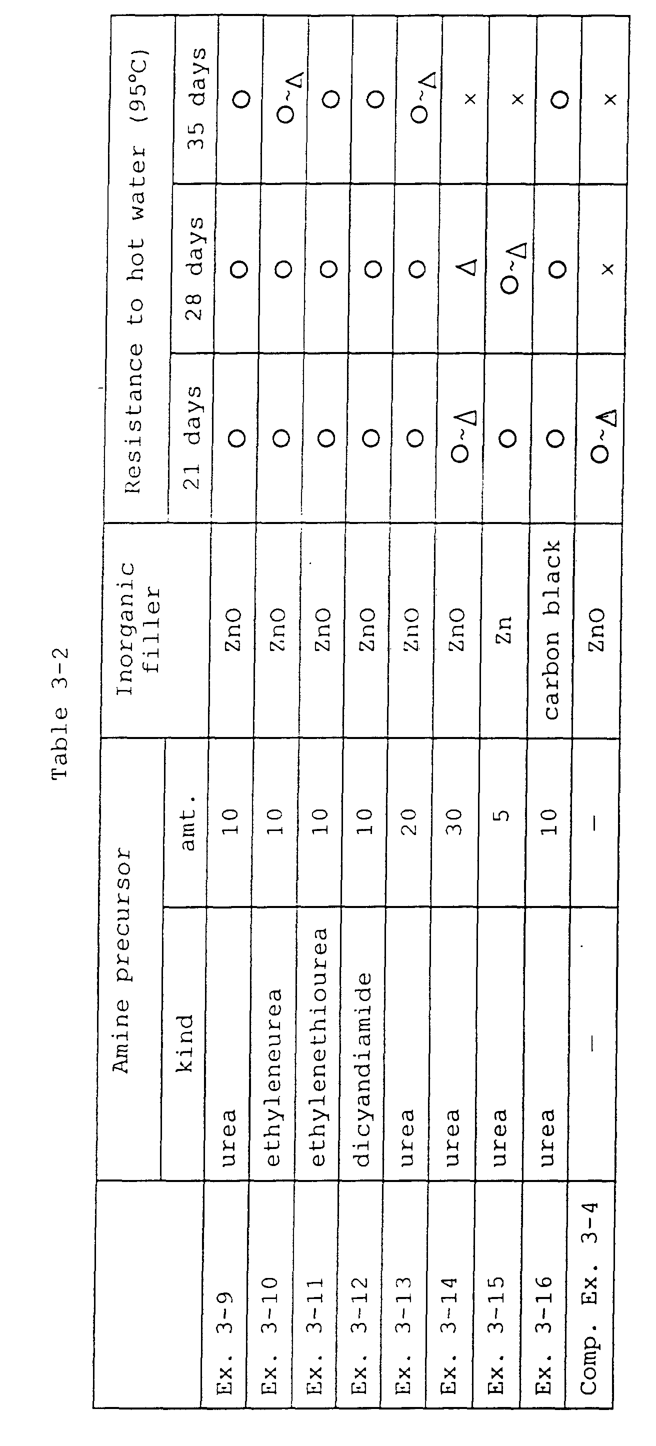

Notes) Adhesion: ○ not peeled, Δ partially peeled × peeled

### *Basic formulation:

| | |
|---|---|
| BN1015 | 100 pts. by wt. |
| dimethylaminoethanol | 20 pts. by wt. |
| butyl cellosolve | 20 pts. by wt. |
| cobalt naphthenate | 3 pts. by wt. |
| inorganic substance | 70 pts. by wt. |
| amine precursor | 10 pts. by wt. |
| water | 566 pts. by wt. |

## Claims

1. A powder coating primer composition comprising one group selected from the groups (1), (2), (3), (4), (5) and (6) defined below:
(1) an acid-modified diene polymer, an aliphatic amine compound or ammonia, an aromatic polyamine compound and an aqueous medium;
(2) an acid-modified diene polymer, an aliphatic amine compound or ammonia, a precursor for a polyamine compound and an aqueous medium;
(3) an acid-modified diene polymer, an organic amine compound or ammonia, an inorganic filler having an isoelectric point of 7 or larger on the surface thereof and being hardly reactive with water and an aqueous medium;
(4) an acid-modified diene polymer, an aliphatic amine compound or ammonia, an aromatic polyamnide compound, an inorganic filler and an aqueous medium;
(5) an acid-modified diene polymer, an aliphatic amine compound or ammonia, a precursor for a polyamine compound an inorganic filer and an aqueous medium;
(6) an acid-modified diene polymer, an inorganic filler having an isoelectric point of 7 or larger on the surface thereof, an organic amine compound or ammonia, and an aqueous medium.

2. The composition as claimed in claim 1, which comprises (3) 100 parts by weight of an acid-modified diene polymer, 5 to 50 parts by weight of an organic amine compound or ammonia, 20 to 120 parts by weight of an inorganic filler having an isoelectric point of 7 or larger on the surface thereof and having being hardly reactive with water and 300 to 1500 parts by weight of an aqueous medium.

3. The composition as claimed in claim 1, which comprises (1) 100 parts by weight of an acid-modified diene polymer, 5 to 50 parts by weight of an aliphatic amine compound or ammonia, 3 to 30 parts by weight of an aromatic polyamine compound and 300 to 1500 parts by weight of an aqueous medium.

4. The composition as claimed in claim 1, which comprises (4) 100 parts by weight of an acid-modified diene polymer, 5 to 50 parts by weight of an aliphatic amine compound or ammonia, 3 to 30 parts by weight of an aromatic polyamine compound, 20 to 120 parts by weight of an inorganic filler and 300 to 1500 parts by weight of an aqueous medium.

5. The composition as claimed in claim 1, which comprises (2) 100 parts by weight of an acid-modified diene polymer, 5 to 50 parts by weight of an aliphatic amine compound or ammonia, 3 to 30 parts by weight of a precursor for an amine compound and 300 to 1500 parts by weight of an aqueous medium.

6. The composition as claimed in claim 1, which comprises (5) 100 parts by weight of an acid-modified diene polymer, 5 to 50 parts by weight of an aliphatic amine compound or ammonia, 3 to 30 parts by weight of a precursor for an amine compound,
20 to 120 parts by weight of an inorganic filler and 300 to 1500 parts by weight of an aqueous medium.

7. The composition as claimed in claim 1, which is selected from the group consisting of the groups (3), (4) and (5) and comprises two or more inorganic fillers.

8. The composition as claimed in claim 7, which comprises zinc oxide and another inorganic filler.

9. The composition as claimed in claim 1, in which the amine compound is a monoamine compound.

10. A process for producing a polymer-coated article of metal, which comprises the steps of coating an article of metal on the surface with the primer composition as defined in any one of claims 1 to 9, baking the resultant and coating the resulting article on the surface with a polymer by way of the fluidized bed dip coating method or the electrostatic coating method.

11. A polymer-coated article of metal wherein a surface of the article of metal is coated with the composition of claim 1.

## Patentansprüche

1. Eine Grundieranstrich-Zusammensetzung für Pulverlacke, enthaltend eine Gruppe, ausgewählt aus den nachstehend definierten Gruppen (1), (2), (3), (4), (5) und (6):
(1) ein mit Säure modifiziertes Dienpolymer, eine aliphatische Aminverbindung oder Ammoniak, eine aromatische Polyaminverbindung und ein wässriges Medium;
(2) ein mit Säure modifiziertes Dienpolymer, eine aliphatische Aminverbindung oder Ammoniak, einen Vorläufer für eine Polyaminverbindung und ein wässriges Medium;
(3) ein mit Säure modifiziertes Dienpolymer, eine organische Aminverbindung oder Ammoniak, einen anorganischen Füllstoff mit einem isoelektrischen Punkt von 7 oder größer auf seiner Oberfläche, der kaum mit Wasser reagiert, und ein wässriges Medium;
(4) ein mit Säure modifiziertes Dienpolymer, eine aliphatische Aminverbindung oder Ammoniak, eine aromatische Polyaminverbindung, einen anorganischen Füllstoff und ein wässriges Medium;
(5) ein mit Säure modifiziertes Dienpolymer, eine aliphatische Aminverbindung oder Ammoniak, einen Vorläufer für eine Polyaminverbindung, einen anorganischen Füllstoff und ein wässriges Medium;
(6) ein mit Säure modifiziertes Dienpolymer, einen anorganischen Füllstoff mit einem isoelektrischen Punkt von 7 oder größer auf seiner Oberfläche, eine organische Aminverbindung oder Ammoniak und ein wässriges Medium.

2. Die Zusammensetzung wie in Anspruch 1 beansprucht, enthaltend (3) 100 Gewichtsteile eines mit Säure modifizierten Dienpolymers, 5 bis 50 Gewichtsteile einer organischen Aminverbindung oder Ammoniak, 20 bis 120 Gewichtsteile eines anorganischen Füllstoffs mit einem isoelektrischen Punkt von 7 oder größer auf seiner Oberfläche, der kaum mit Wasser reagiert, und 300 bis 1500 Gewichtsteile eines wässrigen Mediums.

3. Die Zusammensetzung wie in Anspruch 1 beansprucht, enthaltend (1) 100 Gewichtsteile eines mit Säure modifizierten Dienpolymers, 5 bis 50 Gewichtsteile einer aliphatischen Aminverbindung oder Ammoniak, 3 bis 30 Gewichtsteile einer aromatischen Polyaminverbindung und 300 bis 1500 Gewichtsteile eines wässrigen Mediums.

4. Die Zusammensetzung wie in Anspruch 1 beansprucht, enthaltend (4) 100 Gewichtsteile eines mit Säure modifizierten Dienpolymers, 5 bis 50 Gewichtsteile einer aliphatischen Aminverbindung oder Ammoniak, 3 bis 30 Gewichtsteile einer aromatischen Polyaminverbindung, 20 bis 120 Gewichtsteile eines anorganischen Füllstoffs und 300 bis 1500 Gewichtsteile eines wässrigen Mediums.

5. Die Zusammensetzung wie in Anspruch 1 beansprucht, enthaltend (2) 100 Gewichtsteile eines mit Säure modifizierten Dienpolymers, 5 bis 50 Gewichtsteile einer aliphatischen Aminverbindung oder Ammoniak, 3 bis 30 Gewichtsteile eines Vorläufers für eine Aminverbindung und 300 bis 1500 Gewichtsteile eines wässrigen Mediums.

6. Die Zusammensetzung wie in Anspruch 1 beansprucht, enthaltend (5) 100 Gewichtsteile eines mit Säure modifizierten Dienpolymers, 5 bis 50 Gewichtsteile einer aliphatischen Aminverbindung oder Ammoniak, 3 bis 30 Gewichtsteile eines Vorläufers für eine Aminverbindung, 20 bis 120 Gewichtsteile eines anorganischen Füllstoffs und 300 bis 1500 Gewichtsteile eines wässrigen Mediums.

7. Die Zusammensetzung wie in Anspruch 1 beansprucht, die ausgewählt ist aus der Gruppe bestehend aus den Gruppen (3), (4) und (5) und zwei oder mehrere anorganische Füllstoffe enthält.

8. Die Zusammensetzung wie in Anspruch 7 beansprucht, die Zinkoxid und einen anderen anorganischen Füllstoff enthält.

9. Die Zusammensetzung wie in Anspruch 1 beansprucht, worin die Aminverbindung eine Monoaminverbindung ist.

10. Ein Verfahren zur Herstellung eines mit Polymer beschichteten Metallgegenstands, umfassend die Schritte des Beschichtens eines Metallgegenstands auf der Oberfläche mit der Grundieranstrich-Zusammensetzung, wie in einem der Ansprüche 1 bis 9 definiert, des Einbrennens des erhaltenen Produkts und des Beschichtens des erhaltenen Gegenstands auf der Oberfläche mit einem Polymer durch das Bewegtbett-Tauchbeschichtungsverfahren oder das elektrostatische Beschichtungsverfahren.

11. Ein mit Polymer beschichteter Metallgegenstand, worin eine Oberfläche des Metallgegenstands mit der Zusammensetzung von Anspruch 1 beschichtet ist.

## Revendications

1. Composition de peinture de fond pour des revêtements en poudre comprenant un groupe sélectionné parmi les groupes (1), (2), (3), (4), (5) et (6) définis ci-dessous :
(1) un polymère de diène modifié par un acide, un composé aminé aliphatique ou de l'ammoniac, un composé de polyamine aromatique et un milieu aqueux ;
(2) un polymère de diène modifié par un acide, un composé aminé aliphatique ou de l'ammoniac, un précurseur d'un composé de polyamine et un milieu aqueux ;
(3) un polymère de diène modifié par un acide, un composé aminé organique ou de l'ammoniac, une charge inorganique ayant un point isoélectrique de 7 ou plus à la surface de celle-ci et réagissant à peine avec de l'eau, et un milieu aqueux ;
(4) un polymère de diène modifié par un acide, un composé aminé aliphatique ou de l'ammoniac, un composé de polyamine aromatique, une charge inorganique et un milieu aqueux ;
(5) un polymère de diène modifié par un acide, un composé aminé aliphatique ou de l'ammoniac, un précurseur d'un composé de polyamine, une charge inorganique et un milieu aqueux ;
(6) un polymère de diène modifié par un acide, une charge inorganique ayant un point isoélectrique de 7 ou plus à la surface de celle-ci, un composé aminé organique ou de l'ammoniac et un milieu aqueux ;

2. Composition selon la revendication 1, qui comprend (3) 100 parties en poids d'un polymère de diène modifié par un acide, 5 à 50 parties en poids d'un composé aminé organique ou d'ammoniaque, 20 à 120 parties en poids d'une charge inorganique ayant un point isoélectrique de 7 ou plus à la surface de celle-ci et réagissant à peine avec l'eau et 300 à 1.500 parties en poids d'un milieu aqueux.

3. Composition selon la revendication 1, qui comprend (1) 100 parties en poids d'un polymère de diène modifié par un acide, 5 à 50 parties en poids d'un composé aminé aliphatique ou d'ammoniaque, 3 à 30 parties en poids d'un composé de polyamine aromatique et 300 à 1.500 parties en poids d'un milieu aqueux.

4. Composition selon la revendication 1, qui comprend (4) 100 parties en poids d'un polymère de diène modifié par un acide, 5 à 50 parties en poids d'un composé aminé aliphatique ou d'ammoniaque, 3 à 30 parties en poids d'un composé de polyamine aromatique, 20 à 120 parties en poids d'une charge inorganique et 300 à 1.500 parties en poids d'un milieu aqueux.

5. Composition selon la revendication 1, qui comprend (2) 100 parties en poids d'un polymère de diène modifié par un acide, 5 à 50 parties en poids d'un composé aminé aliphatique ou d'ammoniaque, 3 à 30 parties en poids d'un précurseur d'un composé aminé et 300 à 1.500 parties en poids d'un milieu aqueux.

6. Composition selon la revendication 1, qui comprend (5) 100 parties en poids d'un polymère de diène modifié par un acide, 5 à 50 parties en poids d'un composé aminé aliphatique ou d'ammoniaque, 3 à 30 parties en poids d'un précurseur d'un composé aminé, 20 à 120 parties en poids d'une charge inorganique et 300 à 1.500 parties en poids d'un milieu aqueux.

7. Composition selon la revendication 1, qui est sélectionnée parmi le groupe constitué des groupes (3), (4) et (5) et comprend deux charges inorganiques ou plus.

8. Composition selon la revendication 7, qui comprend de l'oxyde de zinc et une autre charge inorganique.

9. Composition selon la revendication 1, dans laquelle le composé aminé est un composé de monoamine.

10. Procédé de fabrication d'un objet métallique revêtu d'un polymère, qui comprend les étapes de revêtement d'un objet métallique sur sa surface avec la composition de fond telle que définie dans l'une quelconque des revendications 1 à 9, de cuisson de l'objet obtenu et de revêtement de l'objet obtenu sur sa surface avec un polymère au moyen du procédé de revêtement en plongée sur lit fluidisé ou du procédé de revêtement électrostatique.

11. Objet métallique revêtu d'un polymère dans lequel une surface de l'objet métallique est revêtue de la composition de la revendication 1.
